# EUROPÄISCHE PATENTSCHRIFT

(11) **EP 0 736 554 B1**
(45) Veröffentlichungstag und Bekanntmachung des Hinweises auf die Patenterteilung: **17.06.1998**
(21) Anmeldenummer: 96104589.5
(22) Anmeldetag: 22.03.1996
(51) Int. Cl.: C08G 18/32, C08G 18/38, C08G 18/54

(54) **Verfahren zur Herstellung von flammwidrigen, halogenfreien Polyurethan-Polyharnstoffen**
Process for the preparation of flame-retardant, halogen-free polyurethane polyureas
Procédé pour la préparation de polyuréthane-polyurées ininflammables exemptes d'halogène

(30) Priorität: 04.04.1995 DE 19512470
(43) Veröffentlichungstag der Anmeldung: 09.10.1996
(73) Patentinhaber: BAYER AG, 51368 Leverkusen (DE)
(72) Erfinder: Von Bonin, Wulf, Dr., 51519 Odenthal (DE); Müller, Hanns-Peter, Dr., 51519 Odenthal (DE); Jabs, Gert, Dr., 51519 Odenthal (DE)

(56) Entgegenhaltungen:
- DE-A- 3 833 977
- US-A- 4 680 324

## Beschreibung

Die vorliegende Erfindung betrifft die Herstellung flammwidriger, halogenfreier Polyurethan-Polyharnstoffe mit verbesserten Eigenschaften.

Zusätze zur Verbesserung des Brandverhaltens von Polyurethan-Polyharnstoffen, die Halogenverbindungen und/oder lösliche Phosphorverbindungen enthalten, sind zwar sehr wirksam, aber potentiell toxisch, häufig hydrolyseempfindlich und relativ teuer. Man versucht sie deshalb zu vermeiden.

Halogenfreie anorganische Füllstoffe, z.B. Metallphosphate, sind ebenfalls gut wirksame Brandschutzzusätze. Infolge von deren Unfähigkeit zur Integration in die bei der Polyurethan-Polyharnstoff-Herstellung ablaufenden chemischen Reaktionen kommt es jedoch zu einer inhomogenen Verteilung derartiger Füllstoffe, die mikroskopisch gut erkennbar ist und zu einer Verschlechterung der mechanischen Eigenschaften (Versprödung) führt.

Gemäß eigenen älteren Verschlägen (siehe deutsche Patentanmeldungen P 44 14 331.1 und P 44 38 409.2) kann man Polyurethan-Polyharnstoffe erhalten, bei deren Herstellung wäßrige Zubereitungen von Aminaddukten von sauren Metallsalzen eingesetzt wurden. Hier nehmen diese Addukte an den chemischen Reaktionen teil, die bei der Polyurethan-Polyharnstoff-Herstellung ablaufen, und es entstehen Produkte, die diese Addukte in homogener Verteilung, z.B. in die Zellwände eingebaut, enthalten. Man kann so sowohl zäh-elastische als auch Polyurethan-Polyharnstoffe mit Hartschaumeigenschaften herstellen.

Das mit der Addukt-Zubereitung eingeschleppte Wasser beeinflußt die Schaumbildung nicht negativ. Es entstehen auch dann leichte, gleichmäßig feinporige und stabile Schaumstoffteile, wenn weniger Polyisocyanat eingesetzt wird, als für eine Bindung des Wassers durch Reaktion mit Polyisocyanat erforderlich wäre.

Die mit wäßrigen Zubereitungen von Aminaddukten saurer Metallsalze hergestellten Polyurethan-Polyharnstoffe bestehen im allgemeinen alle Prüfungen, die für die Klassifikation in die Brandklasse B2 (siehe DIN 4102) erforderlich sind. Allerdings wird der sogenannte Brandschachttest nicht bestanden. Bei diesem wird aus dem zu prüfenden Material ein kaminartiger Schacht aufgebaut und von unten her mit einer Gasflamme beflammt. Dabei darf das zu prüfende Material nach einer gewissen Einwirkungszeit der Flamme nicht weiterbrennen und nur bis zu einer gewissen Höhe geschädigt werden.

Es wurde nun ein Verfahren zur Herstellung von flammwidrigen, halogenfreien Polyurethan-Polyharnstoffen aus Polyisocyanaten und Polyolen gefunden, das dadurch gekennzeichnet ist, daß man bei der Herstellung wäßrige Lösungen von Zuckern und/oder Polymethylolverbindungen und Aminaddukte von sauren Metallsalzen der Formel (I)

A₁₋₃B₀₋₁₂P₃₋₉N₄₋₁₂M₀₋₉ xH₂O (I),

in der
- A: für eine oder mehrere Metallverbindungen aus der Gruppe der Hydroxide und Oxide von Aluminium, Magnesium, Calcium und Zink,
- B: für o-Borsäure,
- P: für Phosphor enthaltende Säure,
- N: für Amin und/oder Ammoniak,
- M: für Alkalimetallhydroxid und
- x: für eine ganze Zahl von Null bis 90 stehen,
mitverwendet.

Erfindungsgemäß hergestellte Polyurethan-Polyharnstoffe sind vorzugsweise zellig.

Eine besondere Ausführungsform des erfindungsgemäßen Verfahrens ist dadurch gekennzeichnet, daß man zusätzlich Harnstoff mitverwendet. Harnstoffzussätze führen überraschenderweise zu einer Viskositätsverminderung der wäßrigen Zubereitung von Aminaddukten an saure Metallsalze. Dies ermöglicht eine verbesserte Verarbeitbarkeit und ergibt hervorragende Ergebnisse im Brandschachttest.

Erfindungsgemäß kann man Polyurethan-Polyharnstoff-Schaumstoffe mit Raumgewichten von z.B. im Bereich 15 bis 500 g/l, unter Zusatz von mehr als 5 Gew.-% Aminaddukten von sauren Metallsalzen und unter Zusatz von mehr als 0,5 Gew.-% Zuckern und/oder Polymethylolverbindungen und gegebenenfalls Harnstoff herstellen.

Von den Aminaddukten von sauren Metallsalzen der Formel (I) sind diejenigen der Formel (II) bevorzugt

A₂₋₃B₃₋₉P₆N₆₋₉M₀₋₅ xH₂O (II),

wobei die Symbole die bei Formel (I) angegebene Bedeutung haben.

In den Formeln (I) und (II) steht P beispielsweise für o-Phosphorsäure, Methylphosphonsäure, Pyrophosphorsäure, Oligophosphorsäure und/oder Polyphosphorsäure. In den Formeln (I) und (II) steht A vorzugsweise für Aluminiumhydroxid, P vorzugsweise für o-Phosphorsäure, N vorzugsweise für ein Alkanolamin, insbesondere Mono-, Di- und/oder Triethanolamin, M vorzugsweise für Natrium- oder Kaliumhydroxid und x vorzugsweise für eine ganze Zahl von 6 bis 36. N steht besonders bevorzugt für Monoethanolamin.

Geeignete Aminaddukte von sauren Metallsalzen, deren wäßrige Zubereitungen und deren Herstellung sind beispielsweise beschrieben in den deutschen Offenlegungsschriften 38 33 977, 39 12 552, 40 23 310, 41 26 702, 42 26 044, 42 36 936 und 43 07 631 sowie in den älteren deutschen Patentanmeldungen P 44 14 331.1 und P 44 38 409.2.

Geeignete Aminaddukte von sauren Metallsalzen kann man am einfachsten erhalten, wenn man z.B. ein saures Aluminiumphosphat in wäßrigem Medium unter Rühren bei 20 bis 120°C mit einem Alkanolamin oder einem Addukt von Alkanolamin an o-Borsäure versetzt und dabei End-pH-Werte von beispielsweise 5 bis 8,5, vorzugsweise 6 bis 7,0 einhält.

Wäßrige Zubereitungen von Aminaddukten saurer Metallsalze enthalten vorzugsweise weniger als 50 Gew.-%, besonders bevorzugt 20 bis 45 Gew.-% Wasser.

Als wäßrige Lösungen von Zuckern kommen z.B. solche von üblichen Zuckern und zuckerartigen Verbindungen in Betracht. Bei den Zuckern kann es sich z.B. um Triosen, Tetraosen, Pentosen und Kohlehydrate handeln wie lösliche Stärke, Dextrine, Dextrane, Saccharose, Glucose, Fructose, Lactose, Maltose und Invertzucker. Als zuckerähnliche Verbindungen seien z.B. die aus Cellulose oder Stärke durch säurehydrolytischen oder enzymatischen Abbau zugänglichen Zuckersirupe, z.B. Glucosesirupe genannt, aber auch Polyalkohole wie niedermolekulare Polyvinylalkohole, Sorbit, Mannit, Pentaerythrit und zuckerartige technische Formaldehydkondensate, sogenannte Formosen. Zucker und zuckerartige Verbindungen können einzeln oder in beliebigen Mischungen untereinander eingesetzt werden.

Als wäßrige Lösungen von Polymethylolverbindungen kommen z.B. solche von Methylolverbindungen von Phenolen, Harnstoff und/oder Melamin und/oder N-Methylolverbindungen von wasserlöslichen Resolen und/oder Novolacken in Frage. Bevorzugt sind N-Methylolverbindungen. Es können einzelne Polymethylolverbindungen, aber auch beliebige Gemische verschiedener Polymethylolverbindungen eingesetzt werden. Beispiele für Polymethylolverbindungen sind weiterhin wasserlösliche Aminoplastharze und wasserlösliche Kasein-Formaldehydharze, Harnstoffmethylolverbindungen mit bis zu 4 Methylolgruppen pro Molekül und deren wasserlösliche Vorkondensate. Harnstoffmethylolverbindungen können sich auch von Biuret und höheren Kondensationsprodukten des Harnstoffs ableiten. Bevorzugt sind wasserlösliche Melamin-Methylolverbindungen und wasserlösliche Methylolverbindungen technischer Melaminharze, die z.B. 3 bis 6 Methylolgruppen pro Molekül enthalten und deren Vorstufen. Man kann auch Melaminharzdispersionen einsetzen. Insbesondere die bevorzugten Methylolverbindungen verstärken die Brandschutzeigenschaften der damit hergestellten Polyurethan-Polyharnstoffe.

Auch die wäßrigen Lösungen von Zuckern und Polymethylolverbindungen enthalten vorzugsweise weniger als 50 Gew.-%, besonders bevorzugt zwischen 20 und 45 Gew.-% Wasser. Zuckerlösungen können z.B. im Gemisch mit der wäßrigen Zubereitung von Aminaddukten saurer Metallsalze, z.B. in Gestalt einer Vormischung, eingesetzt werden. Gegebenenfalls kann man solche Vormischungen durch Zusatz einer systemimmanenten Base (z.B. Ethanolamin, Triethanolamin, Ammoniak oder Alkalihydroxid) auf einen pH-Wert von 5,5 bis 8 einstellen.

Gemäß einer besonderen Ausführungsform wird die erfindungsgemäße Herstellung von Polyurethan-Polyharnstoffen so durchgeführt, daß die wäßrige Lösung von Zuckern und/oder Polymethylolverbindungen in situ erzeugt wird, z.B. durch Auflösen von festen Zuckern und/oder Polymethylolverbindungen in wäßrigen Lösungen von Aminaddukten von sauren Metallsalzen, z.B. bei 10 bis 100, vorzugsweise 20 bis 60°C.

Verwendet man (auch) Polymethylolverbindungen, so ist es vorteilhaft, diese entweder getrennt dem Reaktionsraum zuzuführen oder erst kurz vor der Reaktion einem oder mehreren Ausgangskomponenten zuzumischen.

Wenn man Harnstoff einsetzt ist es zweckmäßig, diesen in der wäßrigen Zubereitung der Aminaddukte der sauren Metallsalze, gegebenenfalls bei erhöhter Temperatur, vorzugsweise bei 30 bis 95°C, aufzulösen.

Jeweils bezogen auf die Aminaddukte von sauren Metallsalzen kann man z.B. 0,5 bis 250 Gew.-%, vorzugsweise 1 bis 100 Gew.-% Zucker und/oder Polymethylolverbindungen und gegebenenfalls 0 bis 70 Gew.-%, vorzugsweise 0,1 bis 50 Gew.-% Harnstoff einsetzen.

Als Polyisocyanate kommen aliphatische, aromatische, araliphatische, modifizierte und unmodifizierte Polyisocyanate in Frage, wie sie üblicherweise zur Herstellung von Polyurethan-Polyharnstoffen zum Einsatz gelangen. Bevorzugt sind die technisch verfügbaren, flüssigen MDI-Typen z.B. auf der Basis von Anilin-Formaldehyd-Kondensaten, Toluylendiisocyanate und deren, vorzugsweise hoch siedende Modifizierungsprodukte.

Als Polyole kommen insbesondere aliphatische, vorzugsweise tertiäre Stickstoffatome enthaltende Alkoxylierungsprodukte von Ammoniak und Aminen, wie sie üblicherweise zur Herstellung von Polyurethan-Polyharnstoffen zum Einsatz gelangen, in Frage. Bei den Alkoxylierungsprodukten sind Ethoxylierungs- und Propoxylierungsprodukte, bei den Aminen solche mit 1 bis 12, insbesondere 1 bis 8 Aminogruppen pro Molekül bevorzugt. Die Alkoxylierungsprodukte können z.B. OH-Zahlen von über 50, vorzugsweise über 300 aufweisen. Im einzelnen seien genannt: Mono-, Di- und Triethanolamin, Tripropanolamin, Ethoxylierungs- und Propoxylierungsprodukte von Ammoniak oder Triethanolamin, Ethylendiamin, Polyethylenpolyamin und deren Gemische. Besonders bevorzugt sind Triethanolamin und seine Propoxylierungsprodukte mit OH-Zahlen von 300 bis 600. Die in Frage kommenden Polyole sind in der Regel basisch.

Neben Polyisocyanaten, Polyolen und den erfindungsgemäß für die Herstellung von Polyurethan-Polyharnstoffen einzusetzenden Komponenten können dem Reaktionsgemisch gegebenenfalls weitere, an sich in der Polyurethanchemie bekannte Komponenten zugefügt werden. Bei solchen weiteren Komponenten kann es sich z.B. um modifizierte oder nichtbasische Polyole, Stabilisatoren, Zellstrukturregler, Emulgatoren, Aktivatoren, Carbonsäuren, pH-Regulatoren und/oder Additive handeln.

Als modifizierte Polyole kommen z.B. in Betracht: Polymerpolyol-Dispersionen, PHD-, Polyharnstoff- und Aminoplast-Polyol-Dispersionen, Polyetherpolyole mit anderen Charakteristika als oben für Polyole angegeben, beispielsweise anderen Startern, anderen OH-Zahlen und/oder weiteren reaktiven Gruppen, wie Amino-, Carboxyl- und/oder Sulfoxylgruppen. Auch Zuckerpolyole, Esterpolyole, Polyesterpolyole, Polyetheramine und/oder Polyesteramine, jeweils mit Molekulargewichten von z.B. 62 bis 12 000 und OH-Zahlen von z.B. 10 bis 800, vorzugsweise 30 bis 600, können eingesetzt werden.

Als Stabilisatoren kommen z.B. solche auf Polyether-Polysiloxan-Basis, als Emulgatoren auch Tenside und als Aktivatoren z.B. tertiäre Amine und metallorganische Verbindungen in Betracht, die in der Polyurethanchemie üblich sind.

Bei den Carbonsäuren kann es sich um Mono- oder Polycarbonsäuren und z.B. um solche handeln, die 1 bis 180 C-Atome, vorzugsweise 1 bis 60 C-Atome aufweisen und bei Raumtemperatur flüssig sind. Beispiele von Carbonsäuren sind: Ameisensäure, Essigsäure, Alkylessigsäuren und Phenylessigsäuren, bevorzugt sind flüssige natürliche Fettsäuren wie Ölsäure, Rizinolsäure, Leinölfettsäure, Isostearinsäure, Tallölfettsäure, Sojaölfettsäure, Fischölfettsäure und Rapsölfettsäure, synthetische Fettsäuren und die aus den genannten Fettsäuren zugänglichen Dimer- und Trimer-Säuren und Fettsäurepolymerisate. Besonders bevorzugt sind Ölsäure und Ölsäure enthaltende Fettsäuregemische. Die Fettsäuren können auch ganz oder teilweise in Salzform, etwa als Natrium-, Kalium- und/oder Alkanolaminsalze eingesetzt werden. In einer weniger bevorzugten Ausführungsform können halogenierte Fettsäuren eingesetzt werden, z.B. chlorierte, bromierte und/oder jodierte Ölsäure, Rizinolsäure und/oder Leinölfettsäure. Der Zusatz von Carbonsäuren ist nicht unbedingt zwingend, jedoch bevorzugt, weil er häufig die Schaumstoffbildung erheblich beschleunigt und einen besonders feinporigen Schaum ergibt. Der Anteil von Carbonsäuren am gesamten Reaktionsgemisch kann beispielsweise bei 0 bis 25 Gew.-% liegen. Vorzugsweise beträgt er 1 bis 10 Gew.-%.

Die pH-Regulierung kann gewünschtenfalls mit Säuren, Aminen oder Alkalien erfolgen. Bevorzugt sind o-Phosphorsäure, Ethanolamin und Natriumhydroxid. Vorzugsweise wird im Reaktionsgemisch ein pH-Wert von 5,5 bis 8, besonders bevorzugt von 6,5 bis 7,5 eingestellt.

Additive können von der unterschiedlichsten Art sein. Beispielsweise kann es sich um Treibmittel, Füllstoffe und/oder um Zucker und/oder Polymethylolverbindungen in anderer Form als in wäßriger Lösung handeln. Als Treibmittel kommen z.B. Pentan, Cyclopentan, Fluorkohlenwasserstoffe, Fluorhalogenkohlenwasserstoffe, Dimethylether und sonstige in Frage, die in der Polyurethanchemie üblich sind. Der Anteil von Treibmitteln im gesamten Reaktionsgemisch kann z.B. 0 bis 20 Gew.-% betragen. Vorzugsweise beträgt er zwischen 3 und 10 Gew.-%.

Als Füllstoffe kommen z.B. hydrophobierende natürliche Öle wie Rapsöl, Paraffinöle und/oder Paraffinwachse in Frage, aber auch Polyisobutylene, Polysiloxane, Polyolefine und/oder fluorhaltige Polymere.

Füllstoffe können auch eine zusätzliche brandwidrige Wirkung entfalten, wobei es sich dann beispielsweise um massive, aufgeblähte, blähfähige, flüssige, pulverige, perlen- oder hohlperlenförmige Materialien handeln kann. Beispiele sind: blähfähige Graphite, blähfähige Glimmer, Silikate, Gläser, Borsilikate, intumeszenzfähige und nicht intumeszenzfähige, Brandwidrigkeit vermittelnde Zusätze wie Harnstoffharz-, Melaminharz- oder Phenolharzpulver, Phosphatester, phosphorhaltige Polyole, in Wasser gelöste oder pulverförmige Amin-, Alkali-, Erdalkali-, Zink- und/oder Aluminiumsalze von Säuren des Phosphors oder des Bors (z.B. Ammoniumphosphat, Ammoniumpolyphosphat, Borax, Zinkborat, Ethanolaminborat sowie primäre und/oder sekundäre Orthophosphate von Ammoniak, Monoethanolamin, Natrium, Aluminium und/oder Zink und/oder Phosphate wie in den US-PS'en 3 414 374, 3 945 987 und 4 076 540 beschrieben), Ethylendiaminphosphat, Mono-, Di- und/oder Triethanolamin-o-Phosphate, Melamin, Melaminphosphate, Dicyandiamid, Biuret, Amide und/oder Ester der Phosphorsäuren, etwa Trikresylphosphat, Phenylalkylphosphate, Tris-trichlor-ethylphosphat, Ammoniumchlorid, Ammoniumbromid, Halogenide von Aminen und Metallen, etwa Natriumbromid oder Polyalkylenpolyamin-hydrobromide, Triethanolaminhydrobromid, gegebenenfalls in wäßriger Lösung oder Salzform vorliegende Ortho-, Meta-, Pyro- oder Polyphosphorsäuren, Chlorwasserstoff, Bromwasserstoff, Colemanit, Zinkborat, Titandioxid und/oder Magnesium- und/oder Aluminium-Hydroxide. Halogenfreie Additivkomponenten sind bevorzugt.

Man kann auch erfindungsgemäß in wäßriger Lösung einzusetzende Zucker und/oder Polymethylolverbindungen, etwa Pentaerythrit, Zucker, Stärke, Paraformaldehyd, Harnstoffmethylolverbindungen, Phenolharze und/oder Aminaddukte von Metallphosphaten zusätzlich in fester, gepulverter Form dem Reaktionsgemisch als Füllstoff zufügen.

Im allgemeinen bringt man sämtliche in das Reaktionsgemisch einzubringende Komponenten einzeln oder in geeigneter Weise vorgemischt in den Reaktionsraum ein und verwendet, unter Nichtberücksichtigung der Zuckerlösung, der Polymethylolverbindungen, der Aminaddukte an saure Metallsalze und des mit diesen Komponenten eingebrachten Wassers mehr als die äquivalente Menge an Polyisocyanaten. Diese Polyisocyanatmenge kann z.B. bei über 120 Äquivalent-%, vorzugsweise bei 150 bis 250 Äquivalent-% liegen.

Aminaddukte von sauren Metallsalzen, Zucker und/oder Polymethylolverbindungen können ins Reaktionsgemisch (betrachtet frei von Treibmitteln und Füllstoffen) zusammen in Mengen von z.B. mehr als 5 Gew.-%, vorzugsweise mehr als 25 Gew.-%, insbesondere 30 bis 80 Gew.-% eingebracht werden.

Häufig ist es zweckmäßiger, für die relativen Mengen der Komponenten der Reaktionsmischungen zur erfindungsgemäßen Herstellung von Polyurethan-Polyharnstoffen nicht stöchiometrische, sondern Gewichtsverhältnisse anzugeben. Beispielsweise kann man mit folgenden relativen Mengen arbeiten:
a) Aminaddukte von sauren Metallsalzen: beispielsweise über 1 Gew.-%, vorzugsweise 3 bis 75 Gew.-%, insbesondere 5 bis 65 Gew.-%.
b) Harnstoff: beispielsweise 0 bis 40 Gew.-%, vorzugsweise 1 bis 30 Gew.-%.
c) Summe Zucker und Polymethylolverbindungen: beispielsweise 0,5 bis 65 Gew.-%, vorzugsweise 1 bis 50 Gew.-%, insbesondere 10 bis 40 Gew.-%, wobei die Summe a) + b) + c) beispielsweise 25 bis 75 Gew.-%, vorzugsweise 40 bis 65 Gew.-% betragen kann und wobei von den Komponenten Zucker und Polymethylolverbindungen nur eine vorhanden sein muß und beim Vorliegen beider beliebige relative Mengen möglich sind.
d) Summe Polyisocyanat, Polyol, modifizierte Polyole, Aktivatoren und Emulgatoren: beispielsweise 10 bis 75 Gew.-%, vorzugsweise 25 bis 55 Gew.-%, wobei die Isocyanatmenge, betrachtet in Äquivalent-%, wie oben angegeben beträgt..
e) Carbonsäuren: beispielsweise 0 bis 20 Gew.-%, vorzugsweise 1 bis 10 Gew.-%.
f) Additve (ohne Treibmittel): beispielsweise unter 60 Gew.-%, vorzugsweise 0 bis 50 Gew.-%.
g) Treibmittel: beispielsweise 0 bis 20 Gew.-%, vorzugsweise 3 bis 10 Gew.-%.
h) Wasser: beispielsweise 1 bis 15 Gew.-%, vorzugsweise 3 bis 9 Gew.-%.

Die Komponenten a) bis h) ergeben stets zusammen 100 Gew.-%.

Es ist im allgemeinen vorteilhaft, das erfindungsgemäße Herstellungsverfahren unter Erwärmen durchzuführen. Beispielsweise kann man auf 10 bis 70°C, vorzugsweise 15 bis 40°C erwärmen und zwar die Einzelkomponenten vor dem Zusammenfügen und/oder während des Zusammenfügens und/oder nach dem Zusammenführen der Einzelkomponenten. Wenn man zum Erwärmen Öfen verwendet, können diese z.B. bei 30 bis 100°C, vorzugsweise bei 65 bis 95°C betrieben werden.

Man kann das erfindungsgemäße Verfahren mit und ohne Einsatz von Treibmitteln und bei Normal- oder Überdruck durchführen. Je nachdem erhält man mehr oder weniger aufgeschäumte Schaumstoffe oder massive Produkte. Bevorzugt werden Schaumstoffe hergestellt, die Raumgewichte zwischen 15 und 500 g/l, insbesondere zwischen 18 und 50 g/l und Poren zwischen 0,01 und 3 mm Durchmesser aufweisen.

Die Schaumstoffherstellung selbst kann nach Verfahren erfolgen, die in der Polyurethan-Schaumstoff-Technik üblich sind. Man kann beispielsweise ansatzweise oder kontinuierlich arbeiten, Hoch-, Mittel- und Niederdruck-MehrkomponentenMischverfahren mittels Düsen- oder Rührwerksmischköpfen, Gieß-, Sprüh-, Spritz-, Rotationsguß- oder Doppelband-Produktionsverfahren und Frei- oder Formschäumverfahren in offenen oder geschlossenen, beheizten oder unbeheizten Formen und unter Druck oder drucklos anwenden.

Erfindungsgemäß hergestellte Schaumstoffe können z.B. in den Bereichen Verpackung, Schallschutz, Dekorationen, Verkleidungen, Filter (insbesondere Luftfilter), Isolierungen und Brandschutztechnik eingesetzt werden. Sie weisen verbesserte Brandwidrigkeiten und niedere Brandlasten auf.

Da erfindungsgemäß hergestellte Schaumstoffe offenporig herstellbar sind können sie gegebenenfalls zusätzlich metallisiert, imprägniert oder beschichtet werden, z.B. mit brandhemmenden Stoffen, Gießharzen, Lacken, Hydrophobierungsmitteln, Biociden, Silikonölen, zusätzlichen Mengen der bei ihrer Herstellung verwendeten Aminaddukte von sauren Metallsalzen, Mörteln und/oder Putzen.

Erfindungsgemäß hergestellte Schaumstoffe können auch zur Herstellung von Sandwichteilen mit verschiedenen Deckschichten Verwendung finden, z.B. mit Deckschichten aus Papier, Textilglasnetzen, metallischen Netzen, organischen Netzen, Geweben, Gelegen, Vliesen, Folien, Furnieren oder Platten aus Kunststoff, Holz oder Metall. Solche Schaumstoffe können auch zum Ausfüllen von Hohlräumen, als Fixierhilfen im Bausektor, als Schalldämmung, als Filter- oder Verpackungsmaterial und zur Stoßdämpfung verwendet werden.

Da diese Schaumstoffe weitgehend offenporig herstellbar sind eignen sie sich gut zur Herstellung von sogenannten Vakuumpanelen, bei denen der Schaumstoff mit einer luftundurchlässigen Beschichtung oder Umkleidung versehen und evakuiert wird. Man so verbesserte Isolierwirkungen erzielen.

Die Schaumstoffe können spanabhebend verformt, durch thermische Verfahren bearbeitet, verschweißt, geprägt oder mehrdimensional verformt und geschnitten werden. Sie haben je nach Trocknung Restfeuchten von beispielsweise 0,5 bis 15 Gew.-% und im Bereich von 120 bis 200°C im allgemeinen auch in gewissem Maße thermoplastischen Charakter, was sie warm verformbar macht. Außerdem sind die Schaumstoffe galvanisierbar, thermisch komprimierbar und sägbar. Sie können deshalb in vielfältiger Weise als Halbzeug eingesetzt werden.

Die erfindungsgemäß hergestellten Polyurethan-Polyharnstoffe, insbesondere Polyurethan-Polyharnstoff-Schaumstoffe zeichnen sich durch verbesserte brandtechnische Eigenschaften aus.

Dies ist ausgesprochen überraschend, denn durch den erfindungsgemäßen zusätzlichen Einsatz von organischem Material hätte erwartet werden können, daß eine zusätzliche Brandgaslast entsteht. Die erfindungsgemäß einzusetzenden Zusätze von wäßrigen Lösungen von Zuckern und/oder Polymethylolverbindungen beeinflussen außerdem überraschenderweise nicht das Bildungsvermögen der Schaumstoffe, obgleich wäßrige Lösungen mit Polyisocyanaten häufig unverträglich sind und durch das Wasser und die Zucker und/oder Polymethylolverbindungen zusätzliche OH-Gruppen eingebracht werden, die grundsätzlich zur Reaktion mit Polyisocyanaten befähigt sind und damit ungünstig veränderte Eigenschaften erwarten lassen.

### Beispiele

Die in den Beispielen angegebenen Teile und Prozente beziehen sich auf das Gewicht, soweit nichts anderes vermerkt ist.

### Beschreibung der Herstellung der Ausgangsmaterialien und der Laborbrandschachttest-Prüfmethode

(1) Metallphosphat-Aminaddukt-Lösung (AB/1-Lösung):
   a) 2768 Teile 85 %ige o-Phosphorsäure wurden mit 660 Teilen Wasser verdünnt. Dann wurden 624 Teile Aluminiumhydroxid hinzugesetzt und 30 Minuten bei 90°C gerührt. Es entstand eine klare Lösung eines sauren Aluminiumphosphats.
   b) Dann wurden 741,6 Teile o-Borsäure in 1600 Teilen Monoethanolamin gelöst und unter Zusatz von 24 Teilen Wasser bei 70°C gerührt, wobei eine klare Lösung entstand.
   c) Die beiden so erhaltenen klaren Lösungen wurden unter gutem Rühren bei 80°C vereinigt, wobei eine klare Lösung des Ethanolaminsalzes von Bor-Aluminiumphosphat entstand.

   Diese war ca. 76 %ig und hatte bei 20°C eine Dichte von 1,6 g/cm³ und eine Viskosität von 3000 mPa.s.
   Diese Lösung wird im folgenden alsAB/1-Lösung bezeichnet.
(2) Metallphosphat-Aminaddukt-Lösung (AB/2-Lösung):
   a) 183,2 Teile Ethanolamin wurden mit 185,4 Teilen o-Borsäure bei 80°C in einem Rührtopf in eine klare Lösung überführt.
   b) 173,3 Teile 85 %ige o-Phosphorsäure wurden bei Raumtemperatur in einem Rührtopf vorgelegt. Dann wurden unter Rühren 212,5 Teile 25 %ige wäßrige Ammoniaklösung hinzugefügt, wobei die Innentemperatur unter 50°C gehalten wurde.
   c) 519,8 Teile 85 %ige o-Phosphorsäure wurden mit 156 Teilen Aluminiumhydroxid bei 95°C zu einer nahezu klaren, sauren Metallphosphatlösung umgesetzt. Dann kühlte man auf 70°C ab.
   d) In die bei 70°C gehaltene Lösung, erhalten gemäß c), wurde unter gutem Rühren die etwa 50°C warme Lösung aus b) gegeben. Dabei entstand eine nahezu klare, gut rührbare Lösung, die 30 Minuten bei 90°C gerührt wurde. Dann wurde auf unter 50°C abgekühlt, wobei eine bei Raumtemperatur stabile, fließfähige Lösung entstand.
   e) Die gemäß d) erhaltene Lösung wurde unter intensivem Rühren bei 80 bis 90°C mit der gemäß a) erhaltenen Lösung vermischt. Dann wurde noch 1 Stunde bei 80 bis 90°C nachgerührt und dann unter Rühren abgekühlt. Es wurde eine bei Raumtemperatur weitgehend klare, gut fließfähige Lösung erhalten (Viskosität: 6000 mPa.s). Diese Metallphosphat-Amin-Komplex-Lösung wird im folgenden als AB/2-Lösung bezeichnet.
(3) Metallphosphat-Komplexlösung (AB/3-Lösung):
   In die AB/1-Lösung erhalten gemäß (1c) wurde die Lösung erhalten gemäß (2a) bei Raumtemperatur eingerührt. Man rührte 30 Minuten bei 80°C nach und erhielt eine klare Lösung des mehr Bor enthaltenden Metallphosphat-Komplexes. Diese Lösung wird im folgenden als AB/3-Lösung bezeichnet.
(4) Zuckerlösung Z/1:
   Aus handelsüblichem Speisezucker (= Saccharose) wurde eine 75 %ige wäßrige Lösung hergestellt.
(5) Zuckerlösung Z/2:
   Eine 80 %ige handelsübliche Lösung von sogenanntem technischen Glucosesirup, der ein Gemisch verschiedenster aus Stärke enzymatisch erhältlicher Zucker darstellt.
(6) Lösung einer Polymethylolverbindung M/1:
   Eine wäßrige, ca. 75 %ige Lösung eines weitgehend unvernetzten handelsüblichen Harnstoff-Formaldehydharzes (Plastopal^{®}, BASF).
(7) Lösung einer Polymethylolverbindung M/2:
   Eine 75 %ige wäßrige Lösung eines handelsüblichen unvernetzten Melamin-Formaldehydharzes (Madurit^{®} HW 550, Casella).
(8) Lösung einer Polymethylolverbindung M/3:
   Eine 75 %ige wäßrige Lösung eines handelsüblichen Novolackharzes (Rüttgers).
(9) Laborbrandschachttest-Prüfmethode:
   Teststreifen:
   Sie wurden aus dem Mittelraum des zu prüfenden Schaumstoffteils ausgeschnitten und hatten eine maximal großflächige, aufgerauhte Oberfläche. Die Abmessungen betrugen 2 x 20 x 5 cm. Die Trocknung erfolgte für 24 Stunden bei 80°C oder als Konditionierung für 10 Tage bei Raumtemperatur und 65 % relativer Luftfeuchte.
   Pro Messung wurden 4 Teststreifen als Wandung des Schachtaufbaus (quadratisch, lichter Querschnitt 3 x 3 cm) eingesetzt.
   Schachtaufbau:
   Der Schacht bestand zunächst aus einem Edelstahl-Drahtgewebe von 5 cm Kantenlänge und 22 cm Höhe. In diesen Schacht wurden die Teststreifen wandbündig eingelegt, so daß eine innere quadratische lichte Schachtweite von 3 x 3 cm bei 20 cm Höhe entstand. Der Drahtgewebeteil des äußeren Halters ragte oberhalb des Schachtes noch 2 cm über die Schaumstoffüllung hinaus. Der so präparierte Schacht wurde auf ein Drahtnetz gestellt, aus dem ein mittiges Loch von 4,5 cm Durchmesser ausgeschnitten war. Der Schacht wurde zentriert über dem Loch aufgesetzt. Unter dem Loch brannte nach Zündung, ebenfalls zentriert, ein handelsüblicher Erdgas-Keramik-Lochflächenbrenner mit einer kreisrunden Brennfläche von 2,5 cm Durchmesser im Abstand von 5 cm zum Drahtnetz. Der Brenner wurde mit voller Gaszufuhr betrieben und die Luftzufuhr so eingestellt, daß die Flamme gerade nicht mehr leuchtete und ein nicht leuchtender Flammenkegel von ca. 6,5 cm entstand. Der Brenner brannte 30 Sekunden lang. Während der Brenner in Tätigkeit war, entstand über dem Schacht bei brennfähigen Schaumstoffen eine Flamme aus gut erkennbar brennenden Pyrolysegasen.
   Tests:
   Es wurde nun jeweils festgestellt:
   T1: Ob eine solche Flamme aus brennenden Pyrolysegasen entstand.
   T2: Ob und gegebenenfalls wann nach Zündung des Brenners die Pyrolysegasflamme erlosch.
   T3: Wie lang nach Abstellen des Brenners der Schaumstoffschacht innerhalb einer Zeitspanne von weiteren 30 Sekunden weiter brannte und
   T4: ob Teilabbrand oder Totalabbrand erfolgte.

   Pro Testlauf wurden jeweils 5 Einzelversuche vorgenommen und die Ergebnisse gemittelt.
   Diese Tests vermitteln ein sehr zuverlässiges, reproduzierbares Relativbild über die Brandeigenschaften der jeweils untersuchten Schaumstoffe, wenn sie stets in gleicher Weise, wie es in den folgenden Beispielen der Fall war, durchgeführt werden. In einer Testserie wurde jeweils ein Vergleichs-Schaumstoff (erhalten nach Beispiel 1) mitlaufen gelassen.

### Beispiel 1 (Vergleichsbeispiel)

### Schaumstoff ohne Zusätze von Zuckern oder Polymethylolverbindungen

300 Teile AB/1-Lösung, 3 Teile 50 %ige wäßrige Natriumhydroxidlösung, 25 Teile propoxyliertes Triethanolamin (OH-Zahl 500), 12,5 Teile Ölsäure. 20 Teile Triethanolamin, 2 Teile Polyether-Polysiloxan-Stabilisator und 30 Teile Cyclopentan wurden intensiv vorvermischt und unmittelbar anschließend mit 110 Teilen handelsüblichem, technischem MDI = Diphenylmethan-4,4'-diisocyanat (Desmodur® 44 V 20; Bayer AG) intensiv vermischt.

Sobald die Schaumbildung einsetzte, wurde das Gemisch in eine Kastenform gebracht, in der es zum fertigen Schaumstoff auftrieb. Der Schaumstoff wurde getrocknet (Test A) bzw. konditioniert (Test B). Der entstandene homogenfeinporige Schaumstoff hatte ein Raumgewicht von 21 g/l. Der Brandschachttest wurde mit folgenden Ergebnissen durchgeführt:

| | Test A | Test B |
|---|---|---|
| T1 | ja, stark | ja |
| T2 | nein | nein |
| T3 | über 30 Sekunden | etwas über 30 Sekunden |
| T4 | Vollabbrand | Teilabbrand |

### Beispiel 2 (Vergleichsbeispiel)

Es wurde wie bei Beispiel 1 gearbeitet, jedoch wurde anstelle der AB/1-Lösung jetzt AB/2-Lösung eingesetzt. Der entstandene Schaumstoff hatte ein Raumgewicht von 25 g/l.

### Testergebnisse:

| | Test A | Test B |
|---|---|---|
| T1 | ja | ja |
| | schwächer als bei Beispiel 1 | |
| T2 | nein | nein |
| T3 | 30 Sekunden | 25 Sekunden |
| T4 | Teilabbrand | kein Abbrand |

Hieraus ergibt sich die Beurteilung, daß das Brandverhalten unter Anlegung kritischer Maßstäbe unbefriedigend ist.

### Beispiel 3 (Vergleichsbeispiel)

Es wurde wie bei Beispiel 1 gearbeitet, jedoch wurde anstelle der AB/1-Lösung jetzt AB/3-Lösung eingesetzt. Man erhielt einen feinporigen Schaumstoff mit einem Trockenraumgewicht von 31 g/l.

### Testergebnisse:

| | Test A | Test B |
|---|---|---|
| T1 | ja | ja |
| T2 | nein | nein |
| T3 | 20 Sekunden | 15 Sekunden |
| T4 | Teilabbrand | geringer Teilabbrand |

### Beispiel 4

Es wurde wie in Beispiel 1 gearbeitet, jedoch wurde anstelle der AB/1-Lösung eine Mischung von 80 % AB/1-Lösung und 20 % Z/1-Lösung verwendet. Man erhielt einen feinporigen Schaumstoff mit einem Raumgewicht von 22 g/l.

### Testergebnisse:

| | Test A | Test B |
|---|---|---|
| T1 | ja | ja |
| T2 | nein | 19 Sekunden |
| T3 | 9 Sekunden | 0 Sekunden |

### Beispiel 5

Es wurde wie in Beispiel 1 gearbeitet, jedoch wurde anstelle der AB/1-Lösung eine Mischung aus 70 % AB/2-Lösung und 30 % Z/2-Lösung verwendet. Man erhielt einen Schaumstoff mit einem Raumgewicht von 23 g/l.

### Testergebnisse:

| | Test A | Test B |
|---|---|---|
| T1 | ja | ja |
| T2 | 24 Sekunden | 11 Sekunden |

### Beispiel 6

Es wurde wie in Beispiel 1 verfahren, jedoch wurde anstelle der AB/1-Lösung eine Mischung aus 70 % AB/3-Lösung und 30 % Z/2-Lösung verwendet. Man erhielt einen feinporigen Schaumstoff mit einem Raumgewicht von 28 g/l.

### Testergebnisse:

| | Test A | Test B |
|---|---|---|
| T1 | ja | ja |
| T2 | 20 Sekunden | 11 Sekunden |

### Beispiel 7

Es wurde wie in Beispiel 1 verfahren, jedoch wurde anstelle der AB/1-Lösung eine Mischung aus 60 % AB/2-Lösung und 40 % M/3-Lösung verwendet. Man erhielt einen Schaumstoff mit einem Raumgewicht von 29 g/l.

### Testergebnisse:

| | Test A | Test B |
|---|---|---|
| T1 | ja | ja |
| T2 | nein | nein |
| T3 | 20 Sekunden | 5 Sekunden |

### Beispiel 8

Es wurde wie in Beispiel 1 verfahren, jedoch wurde anstelle der AB/1-Lösung eine Mischung aus 60 % AB/3-Lösung und 40 % M/1-Lösung verwendet. Man erhielt einen feinporigen Schaumstoff mit einem Raumgewicht von 27 g/l.

### Testergebnisse:

| | Test A | Test B |
|---|---|---|
| T1 | ja | ja |
| T2 | nein | 29 Sekunden |
| T3 | 13 Sekunden | 0 Sekunden |

### Beispiel 9

Es wurde wie in Beispiel 1 verfahren, jedoch wurde anstelle der AB/1-Lösung eine Mischung aus 50 % AB/1-Lösung und 50 % M/2-Lösung verwendet. Man erhielt einen homogen-feinporigen Schaumstoff mit einem Raumgewicht von 27 g/l.

### Testergebnisse:

| | Test A | Test B |
|---|---|---|
| T1 | ja, sehr schwach | nein |
| T2 | 5 Sekunden | 0 Sekunden |

### Beispiel 10

Es wurde wie in Beispiel 1 verfahren, jedoch wurde anstelle der AB/1-Lösung eine Mischung aus 50 % AB/1-Lösung, 10 % Harnstoff und 40 % M/2-Lösung verwendet. Man erhielt einen feinporigen Schaumstoff mit einem Raumgewicht von 24 g/l.

### Testergebnisse:

| | Test A | Test B |
|---|---|---|
| T1 | nein | nein |

Nach Abschluß des Tests war die Schachtwand lediglich verfärbt und an den unteren Stellen, wo eine Berührung mit der Brennerflamme stattgefunden hatte, leicht verkohlt.

### Beispiel 11

Es wurde wie in Beispiel 9 verfahren, jedoch wurden anstelle der Natronlauge 3 Teile 85 %ige o-Phosphorsäure eingesetzt. Man erhielt einen feinporigen Schaumstoff mit einem Raumgewicht von 34 g/l.

### Testergebnisse:

| | Test A | Test B |
|---|---|---|
| T1 | sehr schwach bis nein | nein |

### Beispiel 12

Es wurde wie in Beispiel 1 verfahren, jedoch wurde anstelle der AB/1-Lösung eine Mischung aus 50 % AB/1-Lösung, 30 % M/2-Lösung und 20 % Z/2-Lösung verwendet. Man erhielt einen feinporigen Schaumstoff mit einem Raumgewicht von 26 g/l.

### Testergebnisse:

| | Test A | Test B |
|---|---|---|
| T1 | sehr schwach | sehr schwach |
| T2 | 6 Sekunden | 3 Sekunden |

### Beispiel 13

Es wurde wie in Beispiel 10 verfahren, jedoch wurden zusammen mit dem Polyisocyanat noch 50 Teile neutralisierter, trockener Blähgraphit (blähfähiger Graphit, Handelsprodukt) eingemischt. Man erhielt einen homogen wirkenden Schaumstoff mit einem Raumgewicht von 38 g/l.

### Testergebnisse:

| | Test A | Test B |
|---|---|---|
| T1 | sehr schwach bis nein | nein |
| T3 | 2 Sekunden | 0 Sekunden |

Die Beispiele 4 bis 13 zeigen im Vergleich zu den Beispielen 1 bis 3 die deutliche Verbesserung des Brandverhaltens der erfindungsgemäß hergestellten Schaumstoffe.

### Beispiel 14

In 1530 Teile AB/1-Lösung wurden bei 80°C 185 Teile o-Borsäure und 429 Teile Rohrzucker bei 80°C gelöst. Dann wurde abgekühlt und weiter verfahren wie mit der AB/1-Lösung in Beispiel 1, jedoch wurden statt der Natriumhydroxidlösung 3 Teile Monoethanolamin hinzugefügt. Es wurde ein feinporiger Schaumstoff mit einem Raumgewicht von 30 g/l erhalten, der einen mechanisch zäheren Charakter aufwies, als der Schaumstoff aus Beispiel 4.

### Testergebnisse:

| | Test A | Test B |
|---|---|---|
| T1 | ja | ja |
| T2 | 25 Sekunden | 15 Sekunden |
| T2 | 0 Sekunden | 0 Sekunden |

### Beispiel 15

Wenn man trockene Platten aus den gemäß den Beispielen 4 bis 13 hergestellten Schaumstoffen in Polyamid-Polyvinylidenchlorid-Verbundfolien einschweißt und diese evakuiert, erhält man brandtechnisch vorteilhafte Vakuum-Isolationselemente.

### Beispiel 16

Schaumstoffe hergestellt gemäß den Beispielen 8 bis 13 wurden zum Verschluß von Mauerdurchbrüchen und Kabelschotts gegen Feuerdurchtritt verwendet. Sie erwiesen sich als besonders wirkungsvoll, wenn sie noch mit verdünnter AB/1-Lösung oder Melaminharzen imprägniert worden waren.

### Beispiel 17

Geschnittene Platten aus den gemäß den Beispielen 8 bis 13 hergestellten Schaumstoffen mit a) freier und b) schalldurchlässig abgedeckter Oberfläche ergaben brandsichere Schallschutzelemente.

### Beispiel 18

Platten aus den aus den gemäß Beispielen 8 bis 13 erhalten Schaumstoffen wurden jeweils separat mit Metallfolie, Gewebe, Vlies, Papier, Pappe, Preßspanplatten, Furnieren, Kunstharzen, Bitumen und Gipsputz zu Sandwich-Elementen verarbeitet. Man erhielt isolierende Leichtbauelemente mit besonders günstigem Brandverhalten.

### Beispiel 19

Schaumstoffe hergestellt nach Beispielen 4 bis 7 wurden nach üblichen Verfahren zunächst stromlos und dann galvanisch metallisiert und so Halbzeuge erhalten, die bei 100 bis 200°C thermisch komprimierbar, bei Raumtemperatur verformbar, prägbar, schneidbar und sägbar waren.

## Patentansprüche

1. Verfahren zur Herstellung von flammwidrigen, halogenfreien Polyurethan-Polyharnstoffen aus Polyisocyanaten und Polyolen, dadurch gekennzeichnet, daß man bei der Herstellung wäßrige Lösungen von Zuckern und/oder Polymethylolverbindungen und Aminaddukte von sauren Metallsalzen der Formel (I)
A₁₋₃B₀₋₉P₃₋₇N₄₋₁₂M₀₋₉ xH₂O (I),
in der
A für eine oder mehrere Metallverbindungen aus der Gruppe der Hydroxide und Oxide von Aluminium, Magnesium, Calcium und Zink,
B für o-Borsäure,
P für Phosphor enthaltende Säure,
N für Amin und/oder Ammoniak,
M für Alkalimetallhydroxid und
x für eine ganze Zahl von Null bis 90 stehen,
mitverwendet.

2. Verfahren nach Anspruch 1, dadurch gekennzeichnet, daß man zusätzlich Harnstoff verwendet.

3. Verfahren nach Ansprüchen 1 und 2, dadurch gekennzeichnet, daß man Aminaddukte von sauren Metallsalzen der Formel (II) einsetzt
A₂₋₃B₃₋₉P₆N₆₋₉M₀₋₅ xH₂O (II),
in der
A für Aluminiumhydroxid,
B für o-Borsäure,
P für o-Phosphorsäure,
N für ein Alkanolamin,
M für Natrium- oder Kaliumhydroxid und
X für eine ganze Zahl von 6 bis 36 steht.

4. Verfahren nach Ansprüchen 1 bis 3, dadurch gekennzeichnet, daß man als Zucker Triosen, Tetraosen, Pentosen, Kohlehydrate, Dextrine, Dextrane, Saccharose, Glykose, Fructose, Lactose, Maltose, Invert-Zucker, aus Zellulose oder Stärke durch säurehydrolytischen oder enzymatischen Abbau zugängliche Zuckersirupe, Polyalkohole und deren Gemische und/oder als Polymethylolverbindungen solche von Phenolen, Harnstoff und/oder Melamin und/oder N-Methylolverbindungen von wasserlöslichen Resolen, Novolacken, wasserlöslichen Aminoplastharzen, wasserlöslichen Kasein-Formaldehydharzen, Harnstoffmethylolverbindungen mit bis zu 4 Methylolgruppen pro Molekül und/oder deren wasserlösliche Vorkondensate und/oder Harnstoffmethylolverbindungen, die sich von Biuret und höheren Kondensationsprodukten des Harnstoffs ableiten, einsetzt.

5. Verfahren nach Ansprüchen 1 bis 4, dadurch gekennzeichnet, daß man die Aminaddukte von sauren Metallsalzen der Formel (I) als wäßrige Zubereitung, die weniger als 50 Gew.-% Wasser enthält und die wäßrigen Lösungen von Zuckern und/oder Polymethylolverbindungen mit Wassergehalten von weniger als 50 Gew.-% einsetzt.

6. Verfahren nach Ansprüchen 1 bis 5, dadurch gekennzeichnet, daß man bezogen auf die Aminaddukte von sauren Metallsalzen 0,5 bis 250 Gew.-% Zucker und/oder Polymethylolverbindungen und 0 bis 70 Gew.-% Harnstoff einsetzt.

7. Verfahren nach Ansprüchen 1 bis 6, dadurch gekennzeichnet, daß man folgende Komponenten in folgenden relativen Mengen einsetzt:
Aminaddukte von sauren Metallsalzen der Formel (I): über 1 Gew.-%,
Harnstoff 0 bis 40 Gew.-%,
Zucker und/oder Polymethylolverbindungen 0,5 bis 65 Gew.-%,
Summe Polyisocyanat, Polyol, modifizierte Polyole, Aktivatoren und Emulgatoren zählen bis 75 Gew.-%, wobei die Polyisocyanatmenge unter Nichtberücksichtigung der Zuckerlösung, Polymethylolverbindung, der Aminaddukte an saure Metallsalze und des mit diesen Komponenten eingebrachten Wassers mehr als die äquivalente Menge beträgt,
Carbonsäuren 0 bis 20 Gew.-%,
Additive unter 60 Gew.-%,
Treibmittel 0 bis 20 Gew.-% und
Wasser 1 bis 15 Gew.-%,
wobei die Summe dieser Komponenten zusammen 100 Gew.-% ergibt.

8. Verfahren nach Ansprüchen 1 bis 7, dadurch gekennzeichnet, daß man Schaumstoffe mit Raumgewichten zwischen 15 und 500 g/l herstellt.

9. Verwendung von Polyurethan-Polyharnstoffen, hergestellt gemäß Ansprüchen 1 bis 8 in den Bereichen Verpackung, Schallschutz, Dekorationen, Verkleidungen, Filter, Isolierungen und Brandschutztechnik.

10. Verwendung von Polyurethan-Polyharnstoffen, hergestellt gemäß Ansprüchen 1 bis 8 zur Herstellung von Sandwich-Teilen mit Deckschichten aus Papier, Textilglasnetzen, metallischen Netzen, organischen Netzen, Geweben, Gelegen, Vliesen, Folien, Furnieren oder Platten aus Kunststoff, Holz oder Metall, die zum Ausfüllen von Hohlräumen, als Fixierhilfen in Bausektor, sektor, als Schalldämmung, als Filter- oder Verpackungsmaterial und zur Stoßdämpfung verwendet werden.

## Claims

1. Process for the production of flame resistant, halogen-free polyurethane/polyureas from polyisocyanates and polyols, characterised in that aqueous solutions of sugars and/or polymethylol compounds and amine adducts of acidic metal salts of the formula (I) are also used during production
A₁₋₃B₀₋₉P₃₋₇N₄₋₁₂M₀₋₉ xH₂O (I),
in which
A denotes one or more metal compounds from the group comprising hydroxides and oxides of aluminium, magnesium, calcium and zinc,
B denotes o-boric acid,
P denotes an acid containing phosphorus,
N denotes amine and/or ammonia,
M denotes alkali metal hydroxide and
x denotes an integer from 0 to 90.

2. Process according to claim 1, characterised that urea is additionally used.

3. Process according to claims 1 and 2, characterised in that amine adducts of acidic metal salts of the formula (II) are used
A₂₋₃B₃₋₉P₆N₆₋₉M₀₋₅ xH₂O (II),
in which
A denotes aluminium hydroxide,
B denotes o-boric acid,
P denotes o-phosphoric acid,
N denotes an alkanolamine,
M denotes sodium or potassium hydroxide and
x denotes an integer from 6 to 36.

4. Process according to claims 1 to 3, characterised in that the sugars used are trioses, tetroses, pentoses, carbohydrates, dextrins, dextrans, saccharose, glucose, fructose, lactose, maltose, invert sugar, sugar syrups obtainable by acid hydrolysis or enzymatic degradation of cellulose or starch, polyalcohols and mixtures thereof, and/or the polymethylol compounds used are those of phenols, urea and/or melamine and/or N-methylol compounds of water-soluble resols, novolaks, water-soluble aminoplastic resins, water-soluble casein/formaldehyde resins, ureamethylol compounds with up to four methylol groups per molecule and/or the water-soluble precondensation products thereof and/or ureamethylol compounds derived from biuret and higher condensation products of urea.

5. Process according to claims 1 to 4, characterised in that the amine adducts of acidic metal salts of the formula (I) are used as an aqueous preparation containing less than 50 wt.% of water and aqueous solutions of sugars and/or polymethylol compounds with water contents of less than 50 wt.% are used.

6. Process according to claims 1 to 5, characterised in that 0.5 to 250 wt.% of sugars and/or polymethylol compounds and 0 to 70 wt.% of urea are used relative to the amine adducts of acidic metal salts.

7. Process according to claims 1 to 6, characterised in that the following components are used in the following relative quantities:
amine adducts of acidic metal salts of the formula (I): above 1 wt.%,
urea 0 to 40 wt.%,
sugars and/or polymethylol compounds 0.5 to 65 wt.%,
total polyisocyanate, polyol, modified polyols, activators and emulsifiers amount to up to 75 wt.%, wherein the quantity of polyisocyanate, disregarding the sugar solution, polymethylol compound, the amine adducts onto acidic metal salts and the water introduced with these components, is more than the equivalent quantity,
carboxylic acids 0 to 20 wt.%,
additives below 60 wt.%,
blowing agents 0 to 20 wt.%,
water 1 to 15 wt.%,
wherein the sum of these components is always 100 wt.%.

8. Process according to claims 1 to 7, characterised in that foams with densities of between 15 and 500 g/l are produced.

9. Use of polyurethane/polyureas produced according to claims 1 to 8 in packaging, acoustic insulation, decorations, cladding, filters, insulation products and fireproofing.

10. Use of polyurethane/polyureas produced according to claims 1 to 8 for the production of sandwich products with outer layers made from paper, textile glass gauzes, metallic gauzes, organic gauzes, woven fabrics, laid fabrics, nonwoven fabrics, films, veneers or sheets of plastic, wood or metal, which are used to fill cavities, as fixing aids in the construction sector, as acoustic insulation, as a filter or packaging material and to provide impact protection.

## Revendications

1. Procédé pour préparer des polyuréthane-polyurées exemptes d'halogènes et ininflammables à partir de polyisocyanates et polyols, caractérisé en ce que, à la préparation, on utilise conjointement des solutions aqueuses de sucres et/ou de dérivés polyméthylolés et d'adducts d'amines de sels métalliques acides de formule (I):
A₁₋₃B₀₋₁₂P₃₋₉N₄₋₁₂M₀₋₉ xH₂O (I),
dans laquelle :
A représente un ou plusieurs dérivés métalliques du groupe des hydroxydes et oxydes de l'aluminium, du magnésium, du calcium et du zinc,
B représente l'acide orthoborique,
P représente un acide contenant du phosphore,
N représente une amine et/ou l'ammoniac,
M représente un hydroxyde de métal alcalin, et
x est un nombre entier allant de 0 à 90.

2. Procédé selon la revendication 1, caractérisé en ce que l'on utilise en outre de l'urée.

3. Procédé selon les revendications 1 et 2, caractérisé en ce que l'on utilise des adducts d'amines et de sels métalliques acides de formule (II)
A₂₋₃B₃₋₉P₆N₆₋₉M₀₋₅ xH₂O (II),
dans laquelle :
A représente l'hydroxyde d'aluminium,
B représente l'acide orthoborique,
P représente l'acide orthophosphorique,
N représente une alcanolamine,
M représente l'hydroxyde de sodium ou de potassium,
x est un nombre entier allant de 6 à 36.

4. Procédé selon les revendications 1 à 3, caractérisé en ce que l'on utilise en tant que sucres des trioses, des tétroses, des pentoses, des hydrates de carbone, des dextrines, des dextranes, le saccharose, le glucose, le fructose, le lactose, le maltose, du sucre inverti, des sirops de sucre obtenus par dégradation hydrolytique acide ou dégradation enzymatique de la cellulose ou de l'amidon, des polyalcools et leurs mélanges et/ou, en tant que dérivés polyméthylolés, les dérivés polyméthylolés de phénols, de l'urée et/ou de la mélamine et/ou des dérivés N-méthylolés de résoles solubles dans l'eau, de novolaques, de résines aminoplastes solubles dans l'eau, de résines caséine-formaldéhyde solubles dans l'eau, des dérivés méthylolés de l'urée contenant jusqu'à quatre groupes méthylol par molécule et/ou leurs précondensats solubles dans l'eau et/ou des dérivés méthylolés de l'urée dérivant du biuret et de produits de condensation plus forte de l'urée.

5. Procédé selon les revendications 1 à 4, caractérisé en ce que l'on utilise les adducts d'amines et de sels métalliques acides de formule (I) sous la forme de compositions aqueuses contenant moins de 50 % en poids d'eau et les solutions aqueuses de sucre et/ou de dérivés polyméthylolés à des teneurs en eau inférieures à 50 % en poids.

6. Procédé selon les revendications 1 à 5, caractérisé en ce que, par rapport aux adducts d'amines et de sels métalliques acides, on utilise de 0,5 à 250 % en poids de sucres et/ou de dérivés polyméthylolés et de 0 à 70 % en poids d'urée.

7. Procédé selon les revendications 1 à 6, caractérisé en ce que l'on utilise les composants suivants, en les quantités relatives indiquées :
- adducts d'amines et de sels métalliques acides de formule (I): plus de 1 % en poids,
- urée : 0 à 40 % en poids
- sucres et/ou dérivés polyméthylolés : 0,5 à 65 % en poids,
- somme du polyisocyanate, du polyol, des polyols modifiés, des activateurs et agents émulsionnants : jusqu'à 75 % en poids, la quantité du polyisocyanate, non tenu compte de la solution de sucre, du dérivé polyméthylolé, des adducts d'amines et de sels métalliques acides et de l'eau introduite avec ces composants, étant supérieure à la quantité équivalente,
- acides carboxyliques : 0 à 20 % en poids,
- additifs : moins de 60 % en poids,
- agents porogènes : 0 à 20 % en poids, et
- eau : 1 à 15 % en poids,
la somme de ces composants représentant 100 % en poids.

8. Procédé selon les revendications 1 à 7 caractérisé en ce que l'on prépare des mousses à des densités apparentes de 15 à 500 g/l.

9. Utilisation des polyuréthanes-polyurées préparées selon les revendications 1 à 8 dans les domaines de l'emballage, de l'isolation sonore, de la décoration, du revêtement, du filtrage, de l'isolation et de la protection contre l'incendie.

10. Utilisation des polyuréthanes-polyurées préparées selon les revendications 1 à 8, pour la fabrication de pièces en sandwich à couches de couverture en papier, toiles de verre, toiles métalliques, toiles organiques, tissus, étoffes non tissées, nappes fibreuses, feuilles, contre-plaqués ou plaques de résine synthétique, de bois ou de métal, utilisées pour le garnissage d'espaces creux, en tant que produits auxiliaires de fixation dans le secteur du bâtiment, en tant qu'isolants sonores, matières filtrantes ou matières d'emballage et pour l'amortissement des chocs.
